# EUROPÄISCHE PATENTSCHRIFT

(11) **EP 3 502 606 B1**
(45) Veröffentlichungstag und Bekanntmachung des Hinweises auf die Patenterteilung: **05.05.2021**
(21) Anmeldenummer: 18209468.0
(22) Anmeldetag: 30.11.2018
(51) Int. Cl.: F28D 20/02, F24D 3/08, F24D 11/00, F28D 20/00

(54) **VORRICHTUNG ZUR BEREITSTELLUNG VON HEIZ- UND/ODER BRAUCHWARMWASSER**
DEVICE FOR PROVIDING HEATING AND/OR WARM SERVICE WATER
DISPOSITIF DE FOURNITURE D'EAU DE CHAUFFAGE ET / OU D'EAU CHAUDE SANITAIRE

(30) Priorität: 21.12.2017 CH 15942017
(43) Veröffentlichungstag der Anmeldung: 26.06.2019
(73) Patentinhaber: BMS-Energietechnik AG, 3812 Wilderswil (CH)
(72) Erfinder: LEUENBERGER, Andreas, 3800 Matten (CH); MEISTER, Remo, 3658 Merligen / Sigriswil (CH)
(74) Vertreter: Rentsch Partner AG

(56) Entgegenhaltungen:
- EP-A1- 2 942 591
- EP-A1- 3 121 522
- WO-A1-2014/137275
- FR-A1- 3 044 076
- JP-A- S58 117 964

## Beschreibung

### Technisches Gebiet

Die Erfindung bezieht sich auf das Gebiet der Heizungstechnik für Gebäude, insbesondere der Wärmespeicherung und Brauchwarmwasserbereitstellung. Sie betrifft eine Vorrichtung zur Heiz- und/oder Brauchwarmwasserbereitstellung, sowie ein Verfahren zur Bereitstellung von Heiz- und/oder Brauchwarmwasser Eine derartige Vorrichtung gemäß dem Oberbegriff von Anspruch 1 ist aus der JPS58117964 bekannt.

### Stand der Technik

In der Gebäudetechnik stellt der Energiebedarf der Bereitstellung von Brauchwarmwasser mit etwa 15% des Gesamtenergiebedarfs eines Privathaushalts nach der Raumwärme den bedeutendsten energetischen Verwendungszweck dar. Während der Bedarf an Raumwärme in den letzten Jahren durch stetige Verbesserungen im Bereich der Gebäudeisolation signifikant gesenkt werden konnte, bleibt der Wärmebedarf für die Bereitstellung von Brauchwarmwasser auf konstant hohem Niveau. Normalerweise wird Wärme in einem Haushalt von einem zentralen Wärmeerzeuger (z.B. Wärmepumpe, Brenner, Solarthermie) bereitgestellt und in einem zentralen Pufferspeicher gespeichert. Über ein Verteilersystem, welches sich über mehrere Stockwerke erstrecken kann, kann dann die Wärme über einen Wärmeaustauscher an das benötigte Frischwasser abgegeben werden oder direkt in ein Heizsystem geleitet werden. Durch den hohen Leistungsbedarf, müssen das Verteilersystem und der Wärmeerzeuger grosszügig dimensioniert sein um einen ausreichend hohen Wärmetransport garantieren zu können. Dies führt angesichts der benötigten hohen Durchflussraten zu hohen Investitionskosten, grossen Leitungsdurchmessern und aufgrund der relativ grossen Oberfläche des Verteilersystems zu hohen Wärmeverlusten. Des Weiteren verlangen solche Systeme hohe Vorlauftemperaturen, was die Wärmeverluste zusätzlich erhöht.

Eine Verbesserung des Energiebedarfs der Brauchwarmwasserbereitstellung wird durch den Einsatz von dezentralen Elektroboilern erreicht. Diese können beispielswiese in Mehrfamilienhäusern einzelne Stockwerke oder sogar einzelne Wohneinheiten separat mit Wärme versorgen. Der Einsatz solcher Elektroboiler hat allerdings den Nachteil, dass die direkte Umwandlung von elektrischer Energie in Wärme sowohl energetisch als auch exergetisch äusserst ineffizient ist.

Während bei vielen Neubauten weitere aus dem Stand der Technik bekannte verbesserte Systeme (z.B. Solarthermie, Kondensationswärme und effizientere Verteilersysteme) eingesetzt werden, ist der Austausch und/oder die Verbesserung bereits bestehender Systeme in vielen Gebäuden entweder praktisch nicht möglich oder u.a. aufgrund der benötigten Platzverhältnisse mit sehr hohen Installations- und Renovierungskosten verbunden.

Es besteht daher allgemein das Bedürfnis nach Fortschritten auf diesem Gebiet.

### Darstellung der Erfindung

Es ist daher die Aufgabe der Erfindung, den Stand der Technik im Bereich der Heiz- und/oder Brauchwarmwasserbereitstellung weiterzuentwickeln und vorzugsweise die Nachteile des Standes der Technik zu überwinden. In vorteilhaften Ausführungsformen kann die Erfindung Platz- und Kostenersparnisse zur Folge haben und den Wärmebedarf für die Heiz- und/oder Brauchwarmwasserbereitstellung senken.

In einer weiteren vorteilhaften Ausführungsform kann die Erfindung unter geringem Zeit- und Kostenaufwand in ein bereits bestehendes Heizsystem integriert werden.

In einer vorteilhaften Ausführungsform der Erfindung, kann eine effizientere Nutzung eines Wärmeerzeugers ermöglicht werden, unter anderem durch Bereitstellung von tieferen Vorlauf- und/oder Rückflusstemperaturen.

Ein weitere Aufgabe der Erfindung ist es, den Stand der Technik im Bereich der Verfahren zur Bereitstellung von Heiz- und/oder Brauchwarmwasser weiterzuentwickeln. In vorteilhaften Ausführungsformen wird ein energieeffizientes und kostengünstiges Verfahren zur Bereitstellung von Heiz- und/oder Brauchwasser zur Verfügung gestellt.

Diese Aufgaben werden in allgemeiner Weise durch den Gegenstand der unabhängigen Patentansprüche gelöst.

Weitere vorteilhafte Ausführungsformen ergeben sich jeweils aus den abhängigen Ansprüchen sowie der Offenbarung insgesamt.

Die erfindungsgemässe Heiz- und/oder Brauchwarmwasserbereitstellungsvorrichtung umfasst mindestens einen Wärmespeicher, der mindestens eine erste und eine zweite Kammer umfasst. Die mindestens erste und zweite Kammer enthalten jeweils mindestens eine Phasenwechselzusammensetzung, welche mindestens ein Phasenwechselmaterial umfasst.

Die Schmelztemperatur des Phasenwechselmaterials in der ersten Kammer liegt in einem Tieftemperaturbereich und die Schmelztemperatur des Phasenwechselmaterials in der zweiten Kammer liegt in einem Hochtemperaturbereich. Des Weiteren ist jede Kammer mit mindestens einer Zuleitung und mindestens einer Ableitung zur Zuleitung und zur Ableitung eines Fluids fluidisch gekoppelt.

Eine Kammer eines Wärmespeichers im Sinne der Erfindung ist als ein teilweise oder vollständig abgeschlossener befüllbarer Raum in einem Wärmespeicher zu verstehen. Mehrere Kammern können entweder hydraulisch getrennt voneinander oder hydraulisch verbunden sein. Typischerweise sind zwei oder mehrere Kammern räumlich unmittelbar aneinander angeordnet, vorzugsweise übereinander angeordnet. In einem solchen Fall kann die Abgrenzung der Kammern ein fluid-undurchlässiges Trennelement umfassen, beispielsweise eine geschlossene Platte, wobei dann die Kammern hydraulisch getrennt voneinander sind. Des Weiteren kann die Abgrenzung der Kammern ein fluid-durchlässiges Trennelement umfassen, wobei dann die Kammern hydraulisch verbunden sind. Ein fluid-durchlässiges Trennelement kann beispielswiese ein Rost, ein Gitter, ein Netz oder Ähnliches sein, oder sogar vollständig entfallen. In letzterem Fall werden die Kammern durch die Verteilung von unterschiedlichen Phasenwechselmaterialien, mit je einer Schmelztemperatur in einem Hochtemperaturbereich und einer Schmelztemperatur mit einem Niedrigtemperaturbereich, definiert.

Es ist dem Fachmann bewusst, dass der Begriff "Schmelztemperatur" auch einen Schmelztemperaturbereich von einigen °C ± der konkreten Schmelztemperatur bezeichnet. Dies ist vor allem dann der Fall, wenn die mindestens erste Kammer und die mindestens zweite Kammer jeweils mehrere verschiedene Phasenwechselmaterialien enthalten.

Der Begriff "Hochtemperaturbereich" im Sinne der Erfindung umfasst einen in diesem technischen Gebiet der Heizungstechnik gängigen Bereich von 55 bis 65 °C, bevorzugt 57 bis 62 °C und der Begriff "Niedrigtemperaturbereich" im Sinne der Erfindung einen gängigen Bereich von 30 bis 40 °C, bevorzugt 34 bis 38 °C.

Bei einem erfindungsgemässen Fluid handelt es sich typischerweise um Wasser, bevorzugt deionisiertes oder destilliertes Wasser.

Phasenwechselmaterialien sind dem Fachmann hinlänglich bekannt. Diese bezeichnen Materialien mit einer bevorzugt sehr hohen spezifischen Energiedichte, welche unter bestimmten thermodynamischen Bedingungen einen Phasenwechsel, d.h. einen Wechsel des Aggregatszustandes, beispielsweise flüssig ↔ fest, flüssig ↔ gasförmig, oder gasförmig ↔ fest, eingehen können und deren latente Schmelzwärme, Lösungswärme oder Absorptionswärme typischerweise wesentlich grösser ist als die Wärme, die sie aufgrund ihrer normalen spezifischen Wärmekapazität (d.h. ohne den Effekt des Phasenwechsels) speichern können.

Zuleitungen und Ableitungen welche mit einer Kammer fluidisch gekoppelt sind umfassen typischerweise Rohrleitungen, wie sie dem Fachmann hinlänglich bekannt sind. In einem erfindungsgemässen Verfahren kann es zudem vorkommen, dass in einem Schritt eine Leitung eine Zuleitung und in einem weiteren Schritt eine Ableitung darstellt.

In einer weiteren Ausführungsform umfasst die Heiz- und/oder Brauchwarmwasserbereitstellungsvorrichtung mindestens einen Hochtemperaturabnehmer, welcher mit der zweiten Kammer über eine Ableitung fluidisch gekoppelt ist. Der Hochtemperaturabnehmer ist typischerweise eine Frischwasserstation mit einem Plattenwärmeaustauscher oder auch ein Radiator oder ein Konvektor. Typischerweise ist der Wärmespeicher dabei in räumlicher Nähe, d.h. 0.1 bis 30 m, bevorzugt 0.5 bis 15 m, zum Hochtemperaturabnehmer angeordnet. Eine Frischwasserstation ist typischerweise mit einer weiteren Zuleitung und einer Ableitung fluidisch gekoppelt. Die Frischwasserstationen kann vorzugsweise aus dem örtlichen Frischwassernetz mit Frischwasser versorgt werden. Da mit einer erfindungsgemässen Vorrichtung keine Zwischenspeicherung des Frischwassers erforderlich ist, können das Risiko bakterieller Verunreinigungen (z.B. Legionellen) im Frischwasser, insbesondere Trinkwasser, verringert und die Hygieneanforderungen erfüllt werden. Zudem kann das Risiko bakterieller Verunreinigungen durch die nahe räumliche Anordnung des Wärmespeichers zur Frischwasserstation und dem daraus resultierenden kurzen Warmwasserverteilernetz weiter verringert werden.

In einer bevorzugten Ausführungsform umfasst die Heiz- und/oder Brauchwarmwasserbereitstellungsvorrichtung zusätzlich mindestens einen Tieftemperaturabnehmer, welcher mit der ersten Kammer über eine Ableitung und optional über eine Zuleitung, fluidisch gekoppelt ist. Bevorzugt ist ein solcher Tieftemperaturabnehmer eine Flächenheizung, wie z.B. eine Fussbodenheizung, eine Wandheizung oder Ähnliches.

In einer weiteren Ausführungsform liegt die Schmelztemperatur des mindestens einen Phasenwechselmaterials in der ersten Kammer in einem Bereich von 30 bis 40°C, bevorzugt 34 bis 38 °C und die Schmelztemperatur des mindestens einen Phasenwechselmaterials in der zweiten Kammer in einem Bereich von 55 bis 65 °C, bevorzugt 57 bis 62 °C.

In einer bevorzugten Ausführungsform ist das mindestens eine Phasenwechselmaterial in der ersten Kammer aus der Gruppe Na₂HPO₄·12H₂O, 1-Tetradecanol und/oder Eicosan (C₂₀H₄₂) ausgewählt und das mindestens eine Phasenwechselmaterial in der zweiten Kammer aus der Gruppe Na(OAc)₃·3H₂O, 1-Octadecanol und/oder Palmitinsäure ausgewählt.

Erfindungsgemäß sind die Phasenwechselzusammensetzungen in einer Vielzahl von Kapseln angeordnet, vorzugsweise in Metall- oder Kunststoffkapseln. Die Kapseln können insbesondere kugelförmig, quaderförmig, würfelförmig, scheibenförmig oder zylinderförmig sein. Des Weiteren können die Kapseln Rillen und Kanäle aufweisen um eine Vergrösserung der Kapseloberfläche zu bewirken. Die mindestens eine Phasenwechselzusammensetzung in der ersten Kammer kann insbesondere in Kapseln angeordnet sein, die eine unterschiedliche Form und/oder Grösse der Kapseln in welchen die mindestens eine Phasenwechselzusammensetzung in der zweiten Kammer angeordnet sind, aufweisen. Typischerweise ist die erste Kammer des Wärmespeichers zu 80 bis 95 Volumen%, bevorzugt zu 90 bis 93 Volumen% mit Kapseln befüllt und/oder zu 75 bis 90 Volumen%, bevorzugt zu 82 bis 85 Volumen%, mit dem mindestens einen Phasenwechselmaterial befüllt. Des Weiteren kann die zweite Kammer des Wärmespeichers zu 80 bis 95 Volumen%, bevorzugt zu 88 bis 92 Volumen% mit Kapseln befüllt sein und/oder zu 75 bis 90 Volumen%, bevorzugt zu 78 bis 83 Volumen% mit dem mindestens einen Phasenwechselmaterial befüllt sein.

In einer weiteren Ausführungsform umfassen die Phasenwechselzusammensetzungen zusätzlich Additive, beispielsweise Keimbildner, zur Vermeidung oder Verringerung einer Unterkühlung des Phasenwechselmaterials. Solche Keimbildner sind dem Fachmann hinlänglich bekannt. Typische Beispiele für Keimbildner sind sogenannte Impfkristalle mit gleicher oder möglichst ähnlicher Kristallstruktur, welche unter den gegebenen thermodynamischen Bedingungen ihren Aggregatszustand beibehalten. Zudem können diverse mineralische Substanzen, wie z.B. Feldspat, Kryolith, Borax, nanoskalliertes Aluminiumoxid und nanoskalliertes Titaniumoxid als Keimbildner eingesetzt werden. Des Weiteren ist es dem Fachmann bekannt, dass Mikroverunreinigungen einen Phasenwechsel eines Phasenwechselmaterials auslösen können und somit ebenfalls als Additive verwendet werden können.

In einer vorteilhaften Ausführungsform beträgt das Gesamtvolumen des Wärmespeichers 0.05 bis 100 m³, bevorzugt 0.1 bis 2 m³, besonders bevorzugt 0.2 bis 0.4 m³. Damit ist das Gesamtvolumen des Wärmespeichers typischerweise kleiner oder gleich gross als das Gesamtvolumen eines gängigen Elektroboilers. Aus diesem Grund können in Wohnhäusern unter anderem bestehende Elektroboiler ohne grösseren Zeit- und Kostenaufwand durch eine erfindungsgemässe Vorrichtung ersetzt werden. Im Sinne der vorliegenden Erfindung bezeichnet der Begriff "Gesamtvolumen" den Platzbedarf des Wärmespeichers.

In einer weiteren Ausführungsform der Erfindung umfasst die Heiz- und/oder Brauchwarmwasserbereitstellungsvorrichtung einen Wärmeerzeuger, der fluidisch mit der ersten Kammer über eine Ableitung und mit der zweiten Kammer über eine Zuleitung gekoppelt ist. Hierbei sind die erste und die zweite Kammer hydraulisch getrennt, d.h. die Kammern sind so konfiguriert, dass kein direkter Fluidaustausch zwischen den Kammern möglich ist und/oder keine direkte Durchmischung von in den Kammern befindlichen Fluiden möglich ist. Diese Anordnung ermöglicht es, dass ein Fluid von der ersten Kammer zum Wärmeerzeuger geleitet wird, dort erwärmt wird und dann ausgehend vom Wärmeerzeuger in die zweite Kammer transportiert wird. Der Wärmeerzeuger kann beispielsweise eine Wärmepumpe, ein Solarthermie-System, ein Fernwärmesystem, eine Pelletheizung, Abwärmenutzung, Gas- oder Öltherme oder ein anderer Wärmeerzeuger dem Fachmann bekannter und geeigneter Wärmeerzeuger sein.

In einer weiteren Ausführungsform können die erste und die zweite Kammer hydraulisch verbunden sein. Beispielsweise können die Kammern über ein fluid-durchlässiges Trennelement wie einen Rost, ein Gitter, ein Netz oder Ähnliches, hydraulisch verbunden sein. In einer weiteren Ausführungsform umfasst die Heiz- und/oder Brauchwarmwasserbereitstellungsvorrichtung zusätzlich einen Pufferspeicher, welcher mit der ersten Kammer des Wärmespeichers über eine Zuleitung fluidisch gekoppelt ist. Gegebenenfalls kann der Pufferspeicher zusätzlich auch noch mit der zweiten Kammer des Wärmespeichers über eine Zuleitung fluidisch gekoppelt sein.

In einer bevorzugten Ausführungsform umfasst die Heiz- und/oder Brauchwarmwasserbereitstellungsvorrichtung zusätzlich zu einem Pufferspeicher einen Zentralwärmeerzeuger, welcher fluidisch mit dem Pufferspeicher gekoppelt ist. Durch den Einsatz von Phasenwechselmaterialien weist der erfindungsgemässe Wärmespeicher eine hohe und kompakte Wärmespeicherkapazität auf, wodurch die Kapazität des Pufferspeichers verringert werden kann. Des Weiteren können Leistungsspitzen des Zentralwärmeerzeugers von dem erfindungsgemässen Wärmespeicher abgedeckt werden, wodurch die benötigte Leistung des Zentralwärmeerzeugers verringert und dessen Effizienz erhöht werden kann. Dadurch können Zuleitungen und Ableitungen, welche den Pufferspeicher fluidisch mit der ersten Kammer und gegebenenfalls mit der zweiten Kammer koppeln geringer dimensioniert werden und somit der Wärmeverlust verringert werden. Zudem können auf diese Weise geringere Rücklauftemperaturen erreicht werden, wodurch die erfindungsgemässe Vorrichtung insbesondere mit Systemen zur alternativen Energiegewinnung wie z.B. Solarthermie oder Abwärme kombiniert werden kann.

Das erfindungsgemässe Verfahren zur Bereitstellung von Heiz- und/oder Brauchwarmwasser mit einer erfindungsgemässen Vorrichtung umfasst in einem Schritt (i) die Einleitung eines Fluids mit einer ersten Temperatur in eine erste Kammer eines Wärmespeichers, die Abgabe von Wärme vom Fluid an das mindestens eine Phasenwechselmaterial und das Bewirken eines Phasenwechsels des Phasenwechselmaterials in der ersten Kammer. Des Weiteren wird in einem Schritt (ii) ein Fluid mit einer zweiten Temperatur in eine zweite Kammer des Wärmespeichers geleitet, Wärme vom Fluid an das mindestens eine Phasenwechselmaterial in der zweiten Kammer abgegeben und ein Phasenwechsel des Phasenwechselmaterials in der zweiten Kammer bewirkt. In einem nachfolgenden Schritt kühlt das Fluid aus Schritt (i) und/oder das Fluid aus Schritt (ii) in der ersten und/oder der zweiten Kammer ab und in der ersten und/oder der zweiten Kammer wird ein Phasenwechsel des mindestens einen Phasenwechselmaterials bewirkt und Wärme von mindestens einem Phasenwechselmaterial an das jeweilige Fluid abgegeben. Des Weiteren wird das Fluid aus der ersten Kammer mit einer dritten Temperatur abgeleitet und das Fluid aus der zweiten Kammer mit einer vierten Temperatur abgeleitet.

Typischerweise liegt die dritte Temperatur des Fluids in einem Niedrigtemperaturbereich und die vierte Temperatur des Fluids in einem Hochtemperaturbereich. Die erste und zweite Temperatur des Fluids wird jeweils insbesondere so gewählt, dass diese gleich gross oder grösser als die jeweilige Schmelztemperatur des mindestens einen Phasenwechselmaterials ist. Diese kann vorzugsweise zwischen 0.1 und 10 °C, besonders bevorzugt zwischen 1 °C und 8 °C, über der jeweiligen Schmelztemperatur liegen.

Es ist für den Fachmann klar, dass die Formulierungen "Wärme abgeben" und "Wärme aufnehmen" die Übertragung von Wärmeenergie im physikalischen Sinn von einer Substanz A auf eine Substanz B bezeichnet.

### Kurze Erläuterung der Figuren

Anhand der in den nachfolgenden Figuren gezeigten Ausführungsbeispielen und der dazugehörigen Beschreibung werden Aspekte der Erfindung näher erläutert. Es zeigen:
- Fig. 1: zeigt einen schematischen Schnitt einer erfindungsgemässen Heiz- und/oder Brauchwarmwasserbereitstellungsvorrichtung gemäss einer Ausführungsform der Erfindung;
- Fig.2: zeigt eine schematische Darstellung einer erfindungsgemässen Heiz- und/oder Brauchwarmwasserbereitstellungsvorrichtung gemäss einer weiteren Ausführungsform der Erfindung;
- Fig.3: zeigt eine schematische Darstellung einer erfindungsgemässen Heiz- und/oder Brauchwarmwasserbereitstellungsvorrichtung gemäss einer weiteren Ausführungsform der Erfindung;
- Fig.4: zeigt eine schematische Darstellung einer erfindungsgemässen Heiz- und/oder Brauchwarmwasserbereitstellungsvorrichtung gemäss einer weiteren Ausführungsform der Erfindung.

### Wege zur Ausführung der Erfindung

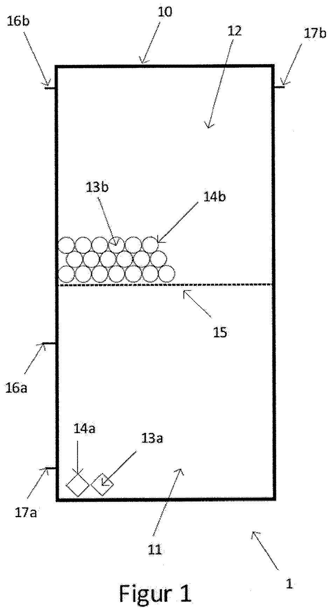

Der in Figur 1 dargestellte schematische Schnitt zeigt eine Ausführungsform der erfindungsgemässen Heiz- und/oder Brauchwarmwasserbereitstellungsvorrichtung 1 umfassend einen Wärmespeicher 10. Dabei umfasst der Wärmespeicher 10 eine erste Kammer 11 und eine zweite Kammer 12, welche durch ein fluid-durchlässiges Trennelement 15 voneinander abgegrenzt sind. Das gezeigte Trennelement 15 ist dabei derart ausgebildet, dass die erste Kammer 11 und die zweite Kammer 12 hydraulisch miteinander verbunden sind und kann beispielsweise ein Rost, ein Gitter oder ein Netz sein. Die erste Kammer 11 enthält eine Phasenwechselzusammensetzung 13a, welche im gezeigten Ausführungsbeispiel in einer Vielzahl von quader- oder würfelförmigen Kapseln 14a angeordnet ist (zur besseren Übersicht sind nur zwei Kapseln dargestellt). Die zweite Kammer 12 enthält eine Phasenwechselzusammensetzung 13b, welche in einer Vielzahl von kugelförmigen Kapseln 14b angeordnet ist (zur besseren Übersicht sind nur einige Kapseln dargestellt). Des Weiteren ist die erste Kammer 11 mit eine Zuleitung 16a sowie einer Ableitung 17a fluidisch gekoppelt und die zweite Kammer 12 mit einer Zuleitung 16b und einer Ableitung 17b fluidisch gekoppelt.

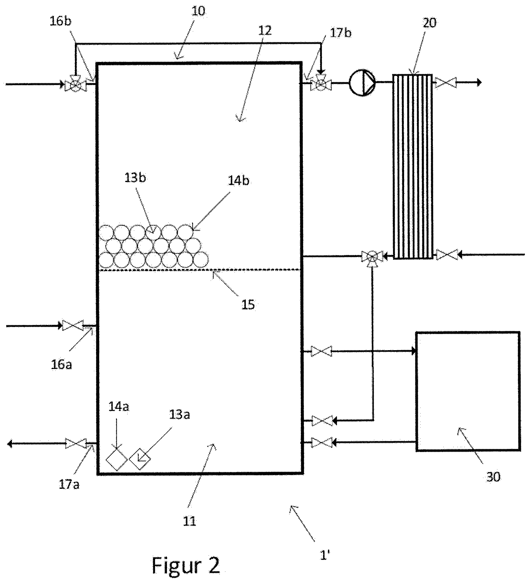

Figur 2 zeigt eine schematische Darstellung einer erfindungsgemässen weiteren Ausführungsform einer Heiz- und/oder Brauchwarmwasserbereitstellungsvorrichtung 1' mit einem Wärmespeicher 10, welcher eine erste Kammer 11 und eine zweite Kammer 12 umfasst, welche durch ein fluid-durchlässiges Trennelement 15 voneinander abgegrenzt sind. In der ersten Kammer 11 ist eine Phasenwechselzusammensetzung 13a enthalten, welche in einer Vielzahl von Kapseln 14a angeordnet ist (zur besseren Übersicht sind nur zwei Kapseln dargestellt). Die zweite Kammer 12 enthält Phasenwechselzusammensetzung 13b, welche in einer Vielzahl von Kapseln 14b angeordnet ist (zur besseren Übersicht sind nur einige Kapseln dargestellt). Die erste Kammer 11 ist fluidisch mit einer Zuleitung 16a und einer Ableitung 17a gekoppelt. Es ist ersichtlich, dass Zuleitungen wie z.B. Zuleitung 16a mit einem Pfeil in Richtung der jeweiligen Kammer dargestellt sind und Ableitungen, wie z.B. Ableitung 17a mit einem Pfeil in entgegengesetzter Richtung zur Kammer dargestellt sind. In der hier gezeigten Ausführungsform ist die erste Kammer 11 mit einer weiteren Ableitung und einer weiteren Zuleitung gekoppelt, über welche die Kammer 11 wiederum in Fluidverbindung mit einem Tieftemperaturabnehmer 30 steht. Die zweite Kammer 12 ist fluidisch mit einer Zuleitung 16b und einer Ableitung 17b gekoppelt. In der dargestellten Ausführungsform steht die zweite Kammer 12 über die Ableitung 17b und einer weiteren Zuleitung in Fluidverbindung mit einem Hochtemperaturabnehmer 20. Der Hochtemperaturabnehmer ist mit einer weiteren Zuleitung und einer weiteren Ableitung fluidisch gekoppelt.

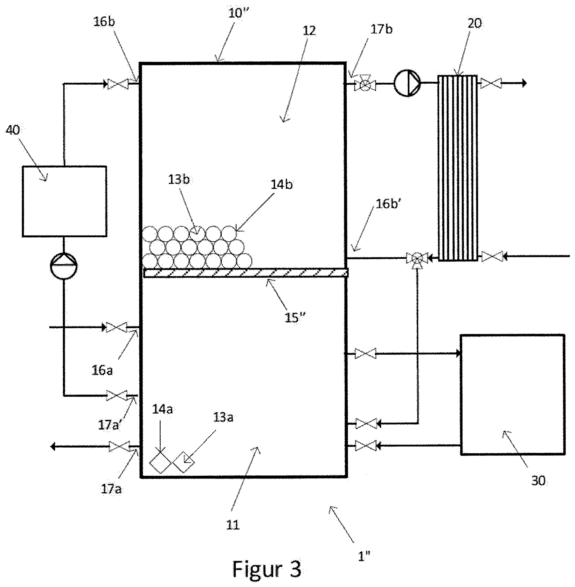

Figur 3 zeigt eine schematische Darstellung einer weiteren erfindungsgemässen Ausführungsform einer Heiz- und/oder Brauchwarmwasserbereitstellungsvorrichtung 1" mit einem Wärmespeicher 10" umfassend eine erste Kammer 11 und eine zweite Kammer 12, welche durch ein fluid-undurchlässiges Trennelement 15" voneinander abgegrenzt sind. Das gezeigte Trennelement 15" ist dabei derart ausgebildet, dass die erste Kammer 11 und die zweite Kammer 12 hydraulisch getrennt voneinander sind. Die erste Kammer 11 enthält eine Phasenwechselzusammensetzung 13a, welche wie gezeigt in einer Vielzahl von Kapseln 14a angeordnet ist (zur besseren Übersicht sind exemplarisch nur zwei Kapseln dargestellt). Die zweite Kammer 12 enthält Phasenwechselzusammensetzung 13b, die in der gezeigten Ausführungsform in einer Vielzahl von Kapseln 14b angeordnet ist (zur besseren Übersicht sind exemplarisch nur einige Kapseln dargestellt). Die erste Kammer 11 ist fluidisch mit einer Zuleitung 16a und Ableitungen 17a und 17a' gekoppelt und umfasst eine weitere Zuleitung und eine weitere Ableitung, über welche die erste Kammer fluidisch mit einem Tieftemperaturabnehmer 30 gekoppelt ist. Die zweite Kammer 12 ist fluidisch mit Zuleitungen 16b und 16b' und Ableitung 17b gekoppelt. Über die Ableitung 17b und die Zuleitung 16b' steht die zweite Kammer mit einem Hochtemperaturabnehmer 20 in Fluidverbindung. Der Hochtemperaturabnehmer 20 ist mit einer weiteren Zuleitung und einer weiteren Ableitung fluidisch gekoppelt. Die gezeigte Heiz- und/oder Brauchwarmwasserbereitstellungsvorrichtung umfasst zusätzlich einen Wärmeerzeuger 40, welcher fluidisch mit der ersten Kammer über die Ableitung 17a' und mit der zweiten Kammer über Zuleitung 16b gekoppelt ist.

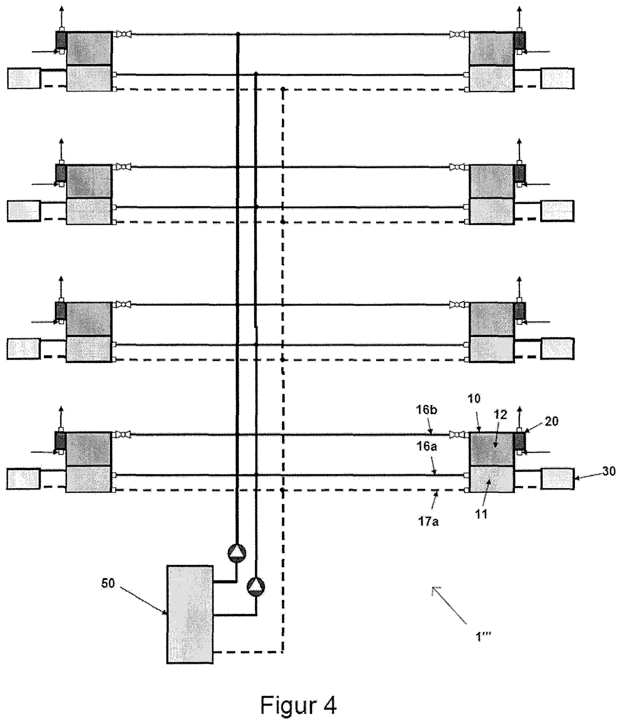

Die in Figur 4 dargestellte schematische Ansicht zeigt eine Ausführungsform der Erfindung umfassend mehrere erfindungsgemässe Wärmespeicher 10, Tieftemperaturabnehmer 30 und Hochtemperaturabnehmer 20. Jeder Wärmespeicher umfasst eine erste Kammer 11 und eine zweiten Kammer 12 (der Deutlichkeit halber sind die Phasenwechselzusammensetzungen nicht gezeigt). Jede erste Kammer 11 ist über eine Zuleitung 16a und eine Ableitung 17a mit einem Pufferspeicher 50 fluidisch gekoppelt. Jede erste Kammer 11 ist zusätzlich über eine weitere Zuleitung und eine weitere Ableitung mit je einem Tieftemperaturabnehmer 30 fluidisch gekoppelt. Jede zweite Kammer 12 ist über die Zuleitung 16b mit dem Pufferspeicher 50 fluidisch gekoppelt. Zusätzlich ist jede zweite Kammer 12 mit je einem Hochtemperaturabnehmer 20 über eine weitere Zuleitung und eine weitere Ableitung (in der Figur nicht dargestellt) fluidisch gekoppelt. In Figur 4 wird somit beispielshaft der Aufbau einer Ausführungsform der Erfindung in einem Mehrfamilienhaus mit fünf Stockwerken gezeigt. Damit wird deutlich, dass durch eine erfindungsgemässe Vorrichtung aufgrund der hohen Wärmespeicherkapazität der Wärmespeicher 10 kleinere Dimensionen der Leitungen vom Pufferspeicher 50 zu den Wärmespeichern 10 zugelassen werden. Eine kleinere Leitungsdimensionierung führt zu tieferen Rücklauftemperaturen und erhöht damit die Effizienz eines Zentralwärmeerzeugers (in Figur 4 nicht dargestellt).

## Patentansprüche

1. Heiz- und/oder Brauchwarmwasserbereitstellungsvorrichtung (1, 1', 1", 1'''), umfassend mindestens einen Wärmespeicher (10), wobei der Wärmespeicher (10) mindestens eine erste und eine zweite Kammer (11, 12) umfasst, welche jeweils mindestens eine Phasenwechselzusammensetzung (13a, 13b), umfassend mindestens ein Phasenwechselmaterial, enthalten, wobei die Schmelztemperatur des Phasenwechselmaterials in der ersten Kammer (11) in einem Tieftemperaturbereich liegt und die Schmelztemperatur des Phasenwechselmateriales in der zweiten Kammer (12) in einem Hochtemperaturbereich liegt; und wobei jede Kammer mit mindestens einer Zuleitung (16a, 16b) und mindestens einer Ableitung (17a, 17b), zur Zuleitung und zur Ableitung eines Fluids, fluidisch gekoppelt ist, **dadurch gekennzeichnet, dass** die Phasenwechselzusammensetzungen (13a, 13b) in einer Vielzahl von Kapseln (14a, 14b) angeordnet sind.

2. Heiz- und/oder Brauchwarmwasserbereitstellungsvorrichtung (1', 1", 1''') nach Anspruch 1, zusätzlich umfassend mindestens einen Hochtemperaturabnehmer (20), vorzugsweise eine Frischwasserstation mit einem Plattenwärmeaustauscher, einen Radiator oder einen Konvektor, wobei der Hochtemperaturabnehmer (20) mit der zweiten Kammer (12) über eine Ableitung (17b) fluidisch gekoppelt ist.

3. Heiz- und/oder Brauchwarmwasserbereitstellungsvorrichtung (1', 1", 1''') nach einem der vorherigen Ansprüche, zusätzlich umfassend mindestens einen Tieftemperaturabnehmer (30), bevorzugt eine Flächenheizung, wobei der Tieftemperaturabnehmer (30) mit der ersten Kammer (11) über eine Ableitung fluidisch gekoppelt ist.

4. Heiz- und/oder Brauchwarmwasserbereitstellungsvorrichtung (1, 1', 1", 1''') nach einem der vorherigen Ansprüche, **dadurch gekennzeichnet, dass** die Schmelztemperatur des mindestens einen Phasenwechselmaterials in der ersten Kammer (11) in einem Bereich von 30 bis 40°C, bevorzugt 34 bis 38 °C liegt; und die Schmelztemperatur des mindestens einen Phasenwechselmaterials in der zweiten Kammer (12) in einem Bereich von 55 bis 65 °C, bevorzugt 57 bis 62 °C liegt.

5. Heiz- und/oder Brauchwarmwasserbereitstellungsvorrichtung (1, 1', 1", 1''') nach einem der vorherigen Ansprüche, **dadurch gekennzeichnet, dass** das mindestens eine Phasenwechselmaterial in der ersten Kammer (11) aus der Gruppe
- Na₂HPO₄·12H₂O
- 1-Tetradecanol
- und/oder Eicosan
ausgewählt ist; und das mindestens eine Phasenwechselmaterial in der zweiten Kammer (12) aus der Gruppe
- Na(OAc)₃·3H₂O
- 1-Octadecanol
- und/oder Palmitinsäure
ausgewählt ist.

6. Heiz- und/oder Brauchwarmwasserbereitstellungsvorrichtung (1, 1', 1") nach einem der vorherigen Ansprüche, **dadurch gekennzeichnet, dass** die Kapseln (14a, 14b) Metall- oder Kunststoffkapseln sind.

7. Heiz- und/oder Brauchwarmwasserbereitstellungsvorrichtung (1, 1', 1", 1''') nach einem der vorherigen Ansprüche, **dadurch gekennzeichnet, dass** die Phasenwechselzusammensetzungen (13a, 13b) zusätzlich Additive, beispielsweise Keimbildner, zur Vermeidung oder Verringerung einer Unterkühlung der Phasenwechselmaterialien, umfassen.

8. Heiz- und/oder Brauchwarmwasserbereitstellungsvorrichtung (1, 1', 1", 1''') nach einem der vorherigen Ansprüche, **dadurch gekennzeichnet, dass** das Gesamtvolumen des Wärmespeichers (10) 0.1 bis 2 m³, bevorzugt 0.2 bis 0.4 m³ beträgt.

9. Heiz- und/oder Brauchwarmwasserbereitstellungsvorrichtung (1") nach einem der vorherigen Ansprüche, zusätzlich umfassend einen Wärmeerzeuger (40), der fluidisch mit der ersten Kammer (11) über eine Ableitung (17a') und mit der zweiten Kammer (12) über eine Zuleitung (16b) gekoppelt ist, **dadurch gekennzeichnet, dass** die erste und die zweite Kammer (11, 12) des Wärmespeichers (10) hydraulisch getrennt sind.

10. Heiz- und/oder Brauchwarmwasserbereitstellungsvorrichtung (1, 1', 1''') nach einem der Ansprüche 1-8, **dadurch gekennzeichnet, dass** die erste und die zweite Kammer (11, 12) hydraulisch verbunden sind.

11. Heiz- und/oder Brauchwarmwasserbereitstellungsvorrichtung (1''') nach einem der vorherigen Ansprüche, zusätzlich umfassend einen Pufferspeicher (50), welcher mit der ersten Kammer (11) des Wärmespeichers (10) über eine Zuleitung (16a) fluidisch gekoppelt ist und gegebenenfalls zusätzlich mit der zweiten Kammer (12) über eine Zuleitung (1 6b) fluidisch gekoppelt ist.

12. Heiz- und/oder Brauchwarmwasserbereitstellungsvorrichtung nach Anspruch 11, zusätzlich umfassend einen Zentralwärmeerzeuger, der mit dem Pufferspeicher (50) fluidisch gekoppelt ist.

13. Verfahren zur Bereitstellung von Heiz- und/oder Brauchwarmwasser mit einer Vorrichtung gemäss einem der vorherigen Ansprüche, **dadurch gekennzeichnet, dass**
(i) ein Fluid mit einer ersten Temperatur in eine erste Kammer (11) eines Wärmespeichers (10) geleitet wird, Wärme vom Fluid an das mindestens eine Phasenwechselmaterial in der ersten Kammer (11) abgegeben wird und in der ersten Kammer (11) ein Phasenwechsel des Phasenwechselmaterials bewirkt wird;
(ii) ein Fluid mit einer zweiten Temperatur in eine zweite Kammer (12) des Wärmespeichers (10) geleitet wird, Wärme vom Fluid an das mindestens eine Phasenwechselmaterial in der zweiten Kammer (12) abgegeben wird und in der zweiten Kammer (12) ein Phasenwechsel des Phasenwechselmaterials bewirkt wird;
(iii) in einem nachfolgenden Schritt das Fluid aus Schritt (i) und/oder das Fluid aus Schritt (ii) in der ersten und/oder der zweiten Kammer (11, 12) abkühlt und in der ersten und/oder der zweiten Kammer (11, 12) ein Phasenwechsel mindestens eines Phasenwechselmaterials bewirkt wird und Wärme von mindestens einem Phasenwechselmaterial an das jeweilige Fluid abgegeben wird;
(iv) das Fluid aus der ersten Kammer (11) mit einer dritten Temperatur abgeleitet wird;
(v) das Fluid aus der zweiten Kammer (12) mit einer vierten Temperatur abgeleitet wird.

## Claims

1. Heating water and/or domestic hot water provision device (1, 1', 1", 1''') including at least one heat storage means (10), wherein the heat storage means (10) includes at least one first and one second chamber (11, 12) each containing at least one phase change composition (13a, 13b) including at least one phase change material, wherein the melting temperature of the phase change material in the first chamber (11) is in a low-temperature range and the melting temperature of the phase change material in the second chamber (12) is in a high-temperature range;
and wherein each chamber is fluidic coupled to at least one inlet (16a, 16b) and at least one outlet (17a, 17b) for input and output of a fluid, **characterized in that** the phase change compositions (13a, 13b) are disposed in a plurality of capsules (14a, 14b).

2. Heating water and/or domestic hot water provision device (1', 1", 1''') according to Claim 1, additionally including at least one high-temperature consumer (20), preferably a fresh water heater with a plate heat exchanger, a radiator or a convector, wherein the high-temperature consumer (20) is fluidic coupled to the second chamber (12) via an outlet (17b) .

3. Heating water and/or domestic hot water provision device (1', 1", 1''') according to either of the preceding claims, additionally including at least one low-temperature consumer (30), preferably a surface heater, wherein the low-temperature consumer (30) is fluidic coupled to the first chamber (11) via an outlet.

4. Heating water and/or domestic hot water provision device (1, 1', 1", 1''') according to any of the preceding claims, **characterized in that** the melting temperature of the at least one phase change material in the first chamber (11) is within a range from 30 to 40°C, preferably 34 to 38°C; and the melting temperature of the at least one phase change material in the second chamber (12) is within a range from 55 to 65°C, preferably 57 to 62°C.

5. Heating water and/or domestic hot water provision device (1, 1', 1", 1''') according to any of the preceding claims, **characterized in that** the at least one phase change material in the first chamber (11) is selected from the group of
- Na₂HPO₄ · 12H₂O
- 1-tetradecanol
- and/or eicosane;
and the at least one phase change material in the second chamber (12) is selected from the group of
- Na(OAc)₃·3H₂O
- 1-octadecanol
- and/or palmitic acid.

6. Heating water and/or domestic hot water provision device (1, 1', 1") according to any of the preceding claims, **characterized in that** the capsules (14a, 14b) are metal or plastic capsules.

7. Heating water and/or domestic hot water provision device (1, 1', 1", 1''') according to any of the preceding claims, **characterized in that** the phase change compositions (13a, 13b) additionally include additives, for example nucleating agents, for avoidance or reduction of subcooling of the phase change materials.

8. Heating water and/or domestic hot water provision device (1, 1', 1", 1''') according to any of the preceding claims, **characterized in that** the total volume of the heat storage means (10) is 0.1 to 2 m³, preferably 0.2 to 0.4 m³.

9. Heating water and/or domestic hot water provision device (1") according to any of the preceding claims, additionally including a heat generator (40) fluidic coupled to the first chamber (11) via an outlet (17a') and to the second chamber (12) via an inlet (16b), **characterized in that** the first and second chambers (11, 12) of the heat storage means (10) are hydraulically separated.

10. Heating water and/or domestic hot water provision device (1, 1', 1''') according to any of Claims 1-8, **characterized in that** the first and second chambers (11, 12) are hydraulically connected.

11. Heating water and/or domestic hot water provision device (1''') according to any of the preceding claims, additionally including a buffer storage means (50) fluidic coupled to the first chamber (11) of the heat storage means (10) via an inlet (16a) and optionally additionally fluidic coupled to the second chamber (12) via an inlet (16b).

12. Heating water and/or domestic hot water provision device according to Claim 11, additionally including a central heat generator fluidic coupled to the buffer storage means (50).

13. Method of providing heating water and/or domestic hot water with a device according to any of the preceding claims, **characterized in that**
(i) a fluid with a first temperature is guided into a first chamber (11) of a heat storage means (10), heat is released from the fluid to the at least one phase change material in the first chamber (11) and a phase change of the phase change material is brought about in the first chamber (11);
(ii) a fluid with a second temperature is guided into a second chamber (12) of the heat storage means (10), heat is released from the fluid to the at least one phase change material in the second chamber (12) and a phase change of the phase change material is brought about in the second chamber (12);
(iii) in a subsequent step, the fluid from step (i) and/or the fluid from step (ii) is cooled down in the first and/or the second chamber (11, 12) and a phase change of at least one phase change material is brought about in the first and/or second chamber (11, 12) and heat is released from at least one phase change material of the respective fluid;
(iv) the fluid from the first chamber (11) is led off with a third temperature;
(v) the fluid from the second chamber (12) is led off with a fourth temperature.

## Revendications

1. Dispositif de fourniture d'eau de chauffage et/ou d'eau chaude de consommation (1, 1', 1", 1'''), comprenant au moins un accumulateur de chaleur (10), l'accumulateur de chaleur (10) comprenant au moins une première et une deuxième chambre (11, 12), qui contiennent chacune au moins une composition à changement de phases (13a, 13b), comprenant au moins un matériau à changement de phases, la température de fusion du matériau à changement de phases dans la première chambre (11) étant située dans une plage de température basse et la température de fusion du matériau à changement de phases dans la deuxième chambre (12) étant située dans une plage de température élevée ;
et chaque chambre étant couplée fluidiquement avec au moins une conduite d'alimentation (16a, 16b) et au moins une conduite d'évacuation (17a, 17b), pour l'alimentation et pour l'évacuation d'un fluide, **caractérisé en ce que** les compositions à changement de phases (13a, 13b) sont agencées dans une pluralité de capsules (14a, 14b).

2. Dispositif de fourniture d'eau de chauffage et/ou d'eau chaude de consommation (1', 1", 1''') selon la revendication 1, comprenant en outre au moins un consommateur à température élevée (20), de préférence une station d'eau fraîche comprenant un échangeur de chaleur à plaques, un radiateur ou un convecteur, le consommateur à température élevée (20) étant couplé fluidiquement avec la deuxième chambre (12) par l'intermédiaire d'une conduite d'évacuation (17b).

3. Dispositif de fourniture d'eau de chauffage et/ou d'eau chaude de consommation (1', 1", 1''') selon l'une quelconque des revendications précédentes, comprenant en outre au moins un consommateur à température basse (30), de préférence un chauffage de surface, le consommateur à température basse (30) étant couplé fluidiquement avec la première chambre (11) par l'intermédiaire d'une conduite d'évacuation.

4. Dispositif de fourniture d'eau de chauffage et/ou d'eau chaude de consommation (1, 1', 1", 1''') selon l'une quelconque des revendications précédentes, **caractérisé en ce que** la température de fusion dudit au moins un matériau à changement de phases dans la première chambre (11) se situe dans une plage allant de 30 à 40 °C, de préférence de 34 à 38 °C ; et la température de fusion dudit au moins un matériau à changement de phases dans la deuxième chambre (12) se situe dans une plage allant de 55 à 65 °C, de préférence de 57 à 62 °C.

5. Dispositif de fourniture d'eau de chauffage et/ou d'eau chaude de consommation (1, 1', 1", 1''') selon l'une quelconque des revendications précédentes, **caractérisé en ce que** ledit au moins un matériau à changement de phases dans la première chambre (11) est choisi dans le groupe constitué par :
- Na₂HPO₄·12H₂O,
- le 1-tétradécanol ;
- et/ou l'eicosane ;
et ledit au moins un matériau à changement de phases dans la deuxième chambre (12) est choisi dans le groupe constitué par :
- Na(OAc)₃·3H₂O,
- le 1-octadécanol,
- et/ou l'acide palmitique.

6. Dispositif de fourniture d'eau de chauffage et/ou d'eau chaude de consommation (1, 1', 1'') selon l'une quelconque des revendications précédentes, **caractérisé en ce que** les capsules (14a, 14b) sont des capsules en métal ou en matière plastique.

7. Dispositif de fourniture d'eau de chauffage et/ou d'eau chaude de consommation (1, 1', 1", 1''') selon l'une quelconque des revendications précédentes, **caractérisé en ce que** les compositions à changement de phases (13a, 13b) comprennent en outre des additifs, par exemple des agents de nucléation, pour éviter ou réduire un sous-refroidissement des matériaux à changement de phases.

8. Dispositif de fourniture d'eau de chauffage et/ou d'eau chaude de consommation (1, 1', 1", 1''') selon l'une quelconque des revendications précédentes, **caractérisé en ce que** le volume total de l'accumulateur de chaleur (10) est de 0,1 à 2 m³, de préférence de 0,2 à 0,4 m³.

9. Dispositif de fourniture d'eau de chauffage et/ou d'eau chaude de consommation (1'') selon l'une quelconque des revendications précédentes, comprenant en outre un générateur de chaleur (40), qui est couplé fluidiquement avec la première chambre (11) par l'intermédiaire d'une conduite d'évacuation (17a') et avec la deuxième chambre (12) par l'intermédiaire d'une conduite d'alimentation (16b), **caractérisé en ce que** la première et la deuxième chambre (11, 12) de l'accumulateur de chaleur (10) sont séparées hydrauliquement.

10. Dispositif de fourniture d'eau de chauffage et/ou d'eau chaude de consommation (1, 1', 1''') selon l'une quelconque des revendications 1 à 8, **caractérisé en ce que** la première et la deuxième chambre (11, 12) sont reliées hydrauliquement.

11. Dispositif de fourniture d'eau de chauffage et/ou d'eau chaude de consommation (1''') selon l'une quelconque des revendications précédentes, comprenant en outre un réservoir tampon (50), qui est couplé fluidiquement avec la première chambre (11) de l'accumulateur de chaleur (10) par l'intermédiaire d'une conduite d'alimentation (16a) et est éventuellement en outre couplé fluidiquement avec la deuxième chambre (12) par l'intermédiaire d'une conduite d'alimentation (16b).

12. Dispositif de fourniture d'eau de chauffage et/ou d'eau chaude de consommation selon la revendication 11, comprenant en outre un générateur de chaleur central, qui est couplé fluidiquement avec le réservoir tampon (50) .

13. Procédé de fourniture d'eau de chauffage et/ou d'eau chaude de consommation avec un dispositif selon l'une quelconque des revendications précédentes, **caractérisé en ce que**
(i) un fluide ayant une première température est introduit dans une première chambre (11) d'un accumulateur de chaleur (10), de la chaleur du fluide est émise vers ledit au moins un matériau à changement de phases dans la première chambre (11) et un changement de phases du matériau à changement de phases est réalisé dans la première chambre (11) ;
(ii) un fluide ayant une deuxième température est introduit dans une deuxième chambre (12) de l'accumulateur de chaleur (10), de la chaleur du fluide est émise vers ledit au moins un matériau à changement de phases dans la deuxième chambre (12) et un changement de phases du matériau à changement de phases est réalisé dans la deuxième chambre (12) ;
(iii) dans une étape ultérieure, le fluide de l'étape (i) et/ou le fluide de l'étape (ii) est refroidi dans la première et/ou la deuxième chambre (11, 12), et un changement de phases d'au moins un matériau à changement de phases est réalisé dans la première et/ou la deuxième chambre (11, 12), et de la chaleur d'au moins un matériau à changement de phases est émise vers le fluide respectif ;
(iv) le fluide de la première chambre (11) est évacué à une troisième température ;
(v) le fluide de la deuxième chambre (12) est évacué à une quatrième température.
